# EUROPEAN PATENT APPLICATION

(11) **EP 1 560 139 A1**
(43) Date of publication of application: **03.08.2005**
(21) Application number: 04290244.5
(22) Date of filing: 30.01.2004
(51) Int. Cl.: G06F 17/60

(54) **Computer-based system and method of designating content for presentation to a target entity**

(71) Applicant: Jaffe Associates LLC, Bethesda, MD 20814 (US)
(72) Inventor: Jaffe, Jay M., Bethesda, MD 20814 (US); Leaman, SHaron Smith, c/o Jaffe Associates Inc., Bethesda, MD 20814 (US); Smith, Donna, c/o Oblon Spivak McClelland, Alexandria, VA 22314 (US)
(74) Representative: Breese, Pierre

(57) **Abstract**

A computer-based system and associated method is provided for designating content for presentation to a target entity. The system includes a mechanism for prompting a user to input identification indicia associated with the user (step 300). The identification indicia corresponds to an access level. The user is granted user access to the content at the access level in response to the identification indicia input by the user (step 302). A marketing interface is provided to the user for selecting content options in accordance with the access level (step 310). The user designates content responsive to the needs of the target entity by selecting the content options of the marketing interface (step 314). Content includes preformatted documents such as those commonly used the industry. The user is provided with options for formatting the designated content through the marketing interface (steps 326,328,332). The content is produced for presentation to the target entity in a desired manner and through a desired form (steps 330,334,340).

## Description

A portion of the disclosure of this patent document contains material which is subject to copyright protection. The copyright owner has no objection to the facsimile reproduction by anyone of the patent document or patent disclosure as it appears in the national Patent and Trademark Office patent file or records, but otherwise reserves all copyright rights whatsoever.

### BACKGROUND OF THE INVENTION

The present invention relates, generally, to a computer-based system and method of presenting selected materials of a collection of materials as target-based content. More particularly, the present invention provides an electronic system for tailoring content such as sales/informative documentation in accordance with a perceived need/interest of a target entity relative to the capabilities/products of an organization.

### DISCUSSION OF THE BACKGROUND

The long term success of an organization is rooted, in large part, in an organization's ability to effectively communicate with a desired audience/market. In the commercial context, information distribution is the means by which an organization communicates or "markets" its goals, services, products and associated promotional materials. The modem commercial marketplace embraces organizations which are capable of dynamically adapting to the varying needs of individual consumers and consumer markets.

With this object in mind, commercial organizations seek to provide marketing information pertaining to their services, products and capabilities to potential customers, suppliers, or other interested parties. In some situations, it is sufficient to convey the written marketing information in the form of print media such as an advertisement in a magazine, newspaper, or other periodical. This information distribution scheme is particularly well suited for markets consuming high volumes of products or services, as these markets are not necessarily tailored for a particular consumer or a specific market application. For example, all of the readers or "targets" of print media receive the same information. However, when the target audience is much smaller, of diversified interest, and the potential revenue at stake is substantial, it is generally more effective to tailor the advertisement to individual target entities of the audience.

Target-based marketing information, or content which is tailored for a specific market or consumer (i.e., target entity), is a fundamental component of organizations which serve a distinct commercial market. Target-based marketing information is utilized by both suppliers and consumers for facilitating commercial relations. For example, when a commercial contractor (i.e., supplier) is planning to respond to a Request For Proposal (RFP) for a large government (i.e., consumer) procurement contract, the contractor prepares one or more carefully written proposal volumes describing the type of systems and/or services which satisfy the requirements of the RFP. Typically, the written proposal is labor intensive and is prepared by a staff of marketing procurement specialists to tout the capabilities of the contracting organization.

Similarly, when representatives of a supplier organization initially contact an individual or consumer company, it is often useful to distribute marketing materials touting the benefits and capabilities of the supplier organization in a manner which is specifically directed to the needs of the individual or consumer company. For example, where a target entity is active in one of several niche markets served by a supplier, the entity is likely not interested in all of the niche markets served by the supplier, but only the market pertaining to the target entities commercial activities. Yet, the preparation of multiple target-based marketing materials, each tailored to the specific interest of a target entity, tend to be costly and time consuming, often requiring a highly specialized staff of skilled personnel to produce such target-based information in advance. Moreover, depending on the nature of the materials to be presented, preserving the original formatting of preformatted (previously defined) documents is often a challenge that adds to the cost and complexity of the task.

As such, a dynamic system and method of designating content for presentation to a target entity is desired which is devoid of the aforementioned limitations.

### SUMMARY OF THE INVENTION

A system is provided for efficiently and effectively producing target-based content, while maintaining the security of proprietary content through a hierarchical access scheme. The present invention conveniently decentralizes the responsibility for designating content for presentation, while centralizing the depository for populating a content database. The format and substance of target-based content is tailored to suit a target entity by an adaptive content designation process. The system and associated method produces target-based content for presentation in a cost effective manner as it conserves resources involving advanced printing of multiple content versions. The system and associated method also advantageously enable for the assembly of preformatted content documents, as well as the preservation or alteration of the original document formatting. Generally, preformatted documents include all types of previously defined electronic documents. Further, the invention allows security management for controlling access to sensitive content and tracks the creation and distribution of content materials.

In accordance with an aspect of the present invention, a computer-based method of designating content for presentation to a target entity is provided. The method includes prompting a user to input identification indicia associated with the user. The identification indicia corresponds to an access level. The user is granted access at the access level corresponding to the identification indicia input by the user. A marketing interface is provided to the user for selecting content options in accordance with the access level. The user designates content responsive to the needs of the target entity by selecting the content options of the marketing interface. The user is provided with options for formatting and editing the designated content through the marketing interface at the appropriate access level. The content is produced for presentation to the target entity in a desired manner and through a desired form.

In another aspect of the invention, an electronic system for designating content for presentation to a target entity is provided. The system includes memory that stores the collection of content and a mechanism prompting a user to input identification indicia associated with the user, the identification indicia corresponding to an access level. The user is then granted access at an access level in response to the identification indicia input by the user. An interface enables the selection of content options in accordance with the access level to designate the selected materials responsive to the needs of the target entity by selecting the content options of the marketing interface and for providing the user with options for formatting the selected materials. An output device produces the selected materials of the collection of content for presentation to the target entity.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings wherein:

FIG. 1 is a high level block diagram of the system of designating content for presentation to a target entity in accordance with the present invention;

FIG. 2 illustrates a block diagram of an exemplary system upon which embodiments of the present invention may be implemented;

FIG. 3 is a flow chart illustrating the operation of designating selected materials of a collection of content for presentation to a target entity in accordance with the present invention;

FIG. 4a is an exemplary interface for accessing an embodiment of the system;

FIG. 4b is an exemplary template for receiving user indicia data fields in accordance with the flow chart of FIG. 3;

FIG. 5a is a sample screen display listing available functional mode and content creation options in accordance with the flow chart of FIG. 3;

FIG. 5b is a sample screen display illustrating a report listing possible duplicate collections of materials;

FIG. 5c is a sample interface for enabling a user to select and organize content;

FIG. 5d is a sample interface for enabling a user to select content from a content collection;

FIG. 5e is a sample screen display of a preview feature and options for outputting target-based content;

FIG. 6a is a sample interface for managing documents;

FIG. 6b is a sample interface for viewing versions of a document;

FIG. 6c is sample interface for editing a version of a document;

FIG. 6d is a sample template for editing a document category;

FIG. 6e is a sample template for editing a location;

FIG. 6f is a sample template for editing a practice area;

FIG 6g is a sample template for adding and categorizing a group of documents to a collection;

FIG 7a is sample template for a report field entry screen;

FIG. 7b is sample screen for a returned report;

FIG. 8a is an exemplary interface for administrative functions; and

FIG 8b is an exemplary template for editing a user's profile.

### DETAILED DESCRIPTION OF THE INVENTION

Certain terminology used in the following description is for convenience only and is not limiting. The term "target entity" as used herein refers to both individuals and/or organizations, the term is not limited to commercial participants, but is equally applicable to non-profit organizations and private parties. The term "click" as used herein refers to the usual manner of selecting and accessing textual and graphical based computer information.
The term does not limit the present invention to mouse-based peripherals or like interface devices, but is simply utilized as a shorthand term for describing known computer functionality and processes. The term "content" as used herein refers to text based, image based and audio materials which are designated for presentation to a target entity for presentation, the materials may be presented in electronic (i.e., E-form) and/or "hard copy" format (i.e., tangible form) where appropriate. In the drawings, the same reference numerals are used for designating the same elements throughout the several figures.

The present invention, as disclosed in the foregoing exemplary embodiment provides a system and associated method of designating selected materials of a collection of content for presentation to a target entity. The system decentralizes the content creation function so that content can be dynamically acquired, designated and edited for presentation by a group of users, across pre-defined access levels from a plurality of locations, while centralizing the depository of the content database. The system also enables the assembly of preformatted content documents, as well as the alteration or preservation of the content's original formatting. The method includes prompting a user to input identification indicia associated with the user. The identification indicia corresponds to an access level. The user is granted access at the access level in response to the identification indicia input by the user. A marketing interface is provided to the user for selecting content options in accordance with the access level. The user designates content responsive to the needs of the target entity by selecting the content options of the marketing interface. The user is provided with options for formatting, updating, and editing the designated content through the marketing interface. The designated content is produced for presentation to the target entity in a desired manner and through a desired form. Thus, the format and substance of target-based content can be readily tailored to suit a target entity, in an efficient and cost effective manner.

Regarding the user access capabilities, it is noted that organizations often find it advantageous, or even necessary, to restrict their employee's access to certain company information, e.g., internal marketing data and company proprietary information. For example, it is often desirable that user access be limited to sensitive information or the ability to change certain information (e.g., cost or pricing information, editing capabilities) be selectively granted. Likewise information for designated selected materials of a collection of content may be limited in other manners. For example, organizational data access restrictions, functional data access restrictions, or other like types of data access restrictions may be implemented. In an organizational data access restriction, the members of one division of a company may not be able to access information for creating content if that information pertains only to another division within the company. In the exemplary embodiment of the present invention, some information would be available to all organizations within a company, while other types of information may be made available on an organization-specific basis. Similarly, a user's access to content may be limited by the user's function within the company. For example, the marketing personnel may have different information available (for instance, categories of content documents) at their disposal for use in designating content than would the staff in the research and development department or the personnel staff.

Regarding the materials of a collection of content, the system allows for content to be stored locally (for example, on a client workstation), remotely in a specific database (for example, in content databases dedicated to the present system), or remotely in a location not dedicated to the present system, such as a general document management system (such as IMANAGE and HUMMINGBIRD) or a webpage. Another embodiment of the system captures content from a webpage and allow for its inclusion as content in a brochure.

More generally, the functionality of the system is extensible and adaptable to accommodate the unique needs of users or groups of users. For example, the system is integrated with a user's existing Customer Relationship Management (CRM) system or human resources (HR) databases. Moreover, the system is optionally configured to interface and/or exchange data with any number of external applications and systems through use of technology that includes, but is not limited to, Application Programming Interfaces (APIs) implemented as a MICROSOFT.NET WEB SERVICE.

### I. System Components

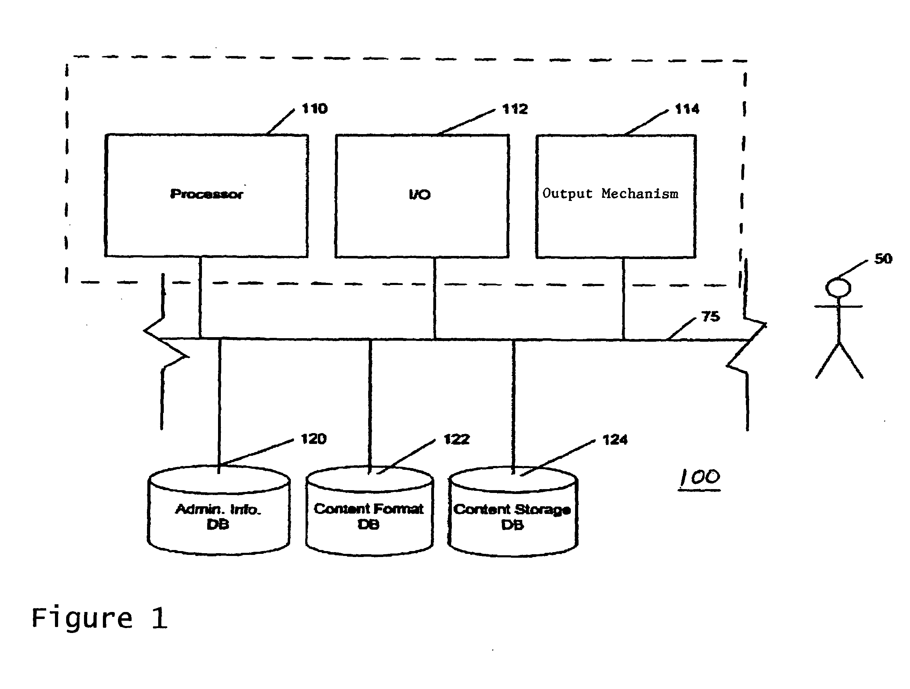

Referring now to the figures, FIG. 1 is a high level block diagram of a system 100 for designating selected materials of a collection of content for presentation to a target entity 50 in accordance with the present invention. The exemplary system 100 includes a computer system 116 having, an input/output (I/O) interface 112, an output mechanism (such as a printer) 114 and a processor 110. The exemplary computer system 116 is operably linked to an administrative information database 120 (DB), a content formatting database 122, and a content storage database 124 via a network 75. Optionally, the exemplary computer system 116 and databases 120, 122, 124 are each located in a plurality of different locations. Moreover, the embodiments of system 100 are hosted remotely from a user interacting through a computer workstation or operated locally (for example, where the system 100 is completely contained within a server at a user's company).

The network of the exemplary embodiment is a local area network (LAN) such as an intranet. Of course, those skilled in the art will recognize that network 75 may be a wide area network (WAN) such as the Internet. Similarly, the network 75 is not limited to hard wired technology but may be formed of any known technology for communicating data such as wireless and/or optical communication networks.

The exemplary embodiment provides several databases, e.g., administrative information database 120, a content formatting database 122, and content storage database 124 operably linked to one another and the computer system 116 via the network 75. In accordance with different embodiments of the present invention, the databases 120-124 can each be contained within a different memory or storage device, although these databases need not be separated into different memories or storage devices. These databases may be part of a single computer memory or any type of storage media capable of storing data or other information. Moreover, a single database may be provided for performing the functionality of databases 120-124 shown here separately for purposes of explaining their functionality.

The exemplary administrative information database 120 includes a database management instruction set for cooperating with an instruction set of computer system 116 or other application software which controls steps for practicing the present invention. The database 120 also includes user indicia such as user names, passwords associated with the user names, and various corresponding levels of access permitted to the different users based upon the corresponding user indicia. In the exemplary embodiment, the database management software utilized for databases 120-124 is MS ACCESS, SYBASE (or the like) which serves as the database engine and data repository, and MS SQL, MS .NET, COLD FUSION, HTML, XML, PHP, ASP (or the like) software as the query and call intermediary.

The content formatting database 122 includes data used to assemble and produce a desired content format such as a marketing brochure. For example, the content formatting database 122 includes fonts, text protocols, word processing scripts, image generation programs, and other logic for working with image data and text data which may go into a marketing content via the brochure formatting database 124.

The content storage database 124 stores copies of marketing brochures which have been created previously, or are in various stages of completion and correlates them to a particular user. The content storage database 124 allows a user to conveniently pull up a previously created version and make some alterations and/or complete an unfinished brochure in accordance with their access level. In addition, the content storage database 124 enables a user, using search criteria, to search for desired documents within existing brochures and to search within the documents themselves. Thus it is not typically necessary to re-create a previously created marketing brochure. The content storage database 124 also stores all content documents to be made available to users for inclusion in brochures. This collection of documents is searchable and editable to allow for a broad and relevant collection of documents from which users can make their selections.

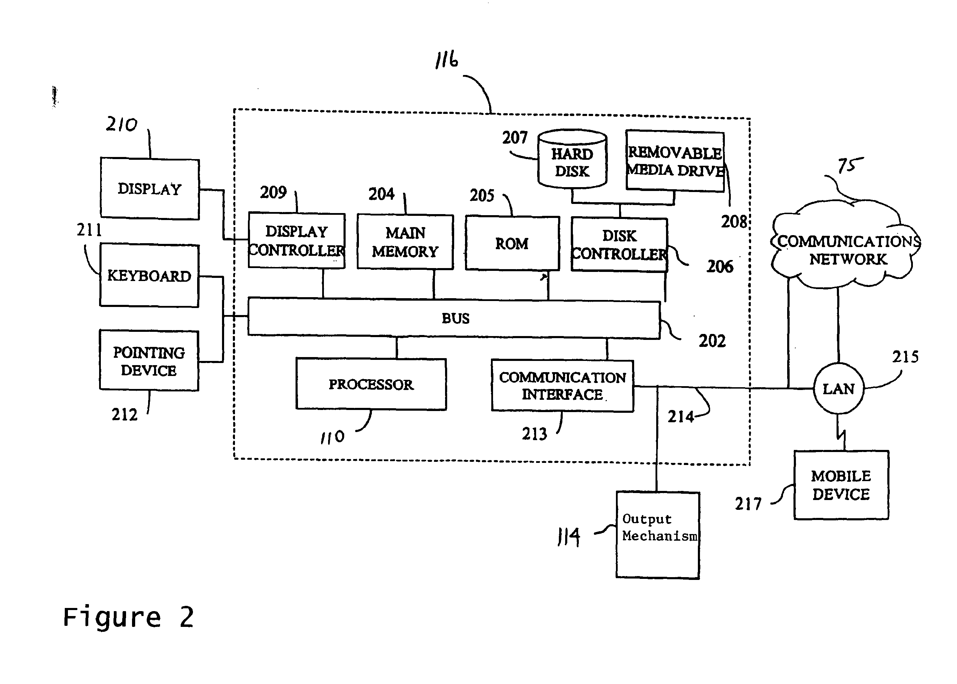

The components of the computer system 116 of the exemplary embodiment are embodied in a suitable personal computer (PC) as shown in FIG. 2, however those skilled in the art will recognize that the computing function of computer system 116 may be performed by a plurality of known computing devices, such as a personal digital assistant (PDA) or laptop computer, similarly, the individual functions of the computer could be spread across several machines as a distributed computing process.

The exemplary computer system 116 is a stand-alone configuration and employs a processor 110 having an instruction set for functioning to exchange control and data information with the components of system 100 as indicated by the solid lines shown connecting the components. Of course, dedicated logic circuitry, or any other sort of computer or computing device capable of carrying out pre-stored instructions may be provided to perform the processing functionality described herein. In the exemplary embodiment, an application program is provided for managing and implementing the functionality of the present invention.

The I/O interface 112 of computer system 116 is provided for communicating with various peripheral components of the computer system 116 as shown in more detail in FIG. 2 together with databases 120, 122 and 124. The exemplary I/O interface 112 may be a port for connecting the computer system 110 to the intranet or other network, or a telephone line, or any other interface circuitry for operably linking the system 100 to additional equipment.

The output mechanism 114 of the exemplary embodiment is a printer such as a dedicated printer connected to the computer system 110, or it may be a printer linked via network 75, through which the computer system 110 can send print jobs to the printer 114. Further, while the content is discussed herein as being presented as a printed material, those skilled in the art will recognize that the presentation format is equally applicable to both electronic and tangible presentation materials. For example, in alternative embodiments, the output mechanism 114 may be an audio visual display such as an NTSC video monitor for providing audio video presentation of content to the target entity 50. Moreover, the output mechanism 114 may be a telecommunication path to network 75 for delivering content in electronic form. For example, where the target entity is geographically remote, the delivery of the target-based content is usually put in an electronic format such as portable document format (PDF). Remote delivery can also be provided via POWERPOINT slideshow, or one of a plurality of known audio/video formats such as MPEG-X, MJPEG, DV, QUICKTIME or REALVIDEO for video conferencing, likewise these formats can be encoded on a suitable magnetic medium (i.e., tangible format) to decrease shipping costs or to free-up bandwidth of the enterprise network 75.

In the exemplary embodiment, the system 100 functions to designate and assemble selected materials of a collection of content for presentation. The presented materials are provided as a format type, such as marketing brochures. While the exemplary embodiment describes a single format of content, namely a "marketing brochure," those skilled in the art will recognize that this is but one of a plurality of format types, such types including the following illustrative examples: prospectus, application, catalog, portfolio and the like.

In an alternative embodiment, the processing function of computer system 116 may be implemented in a network configuration. In this embodiment, the processing function of computer system 116 is performed by a server computer for interfacing with one or more suitably equipped network terminals (not shown) and databases 120, 122 and 124. In this embodiment, the computer system 116 would execute a commercial server application such as available from SUN MICROSYSTEMS as the interface to the network 75 for facilitating communication through hypertext transfer protocol for interactive viewing at an operably linked terminal employing a graphical user interface (GUI) (not shown). In this way, a World Wide Web and FTP front-end may be embodied by computer system 116. Static web pages may comprise the structural portion of the viewable website, including query templates, resultant data pages, site navigation features, and supporting information. Of course, the network terminals would require suitable web browsing software for accessing the web content such as MICROSOFT EXPLORER.

Referring now more specifically to FIG. 2, a block diagram of the computer system 116 is shown upon which the exemplary embodiment of the present invention is implemented. The computer system 116 is a PC, such as a PENTIUM class utilizing an operating system for driving a GUI such as that based on MICROSOFT WINDOWS, of course those skilled in the art will recognize that alternative operating systems such as UNIX, LINUX, MAC-OS, etc. are equally applicable to the teachings of the invention.

The exemplary computer system 116 includes a bus 202 or other communication mechanism for communicating information, and a processor 110 coupled with the bus 202 for processing the information. The computer system 116 also includes a main memory 204, such as a random access memory (RAM) or other dynamic storage device (e.g., dynamic RAM (DRAM), static RAM (SRAM), and synchronous DRAM (SDRAM)), coupled to the bus 202 for storing information and instructions to be executed by processor 110. In addition, the main memory 204 may be used for storing temporary variables or other intermediate information during the execution of instructions by the processor 110. The computer system 116 further includes a read only memory (ROM) 205 or other static storage device (e.g., programmable ROM (PROM), erasable PROM (EPROM), and electrically erasable PROM (EEPROM)) coupled to the bus 202 for storing static information and instructions for the processor 110. In the exemplary embodiment, memory 205 houses databases 120-124.

The computer system 116 also includes a disk controller 206 coupled to the bus 202 to control one or more storage devices for storing information and instructions, such as a magnetic hard disk 207, and a removable media drive 208 (e.g., floppy disk drive, read-only compact disc drive, read/write compact disc drive, compact disc jukebox, tape drive, and removable magneto-optical drive) or an optical medium, a carrier wave (described below), or any other medium from which a computer reads. The functionality of databases 120-124 may be performed by any combination of such devices and technologies. The storage devices may be added to the computer system 116 using an appropriate device interface (e.g., small computer system interface (SCSI), integrated device electronics (IDE), enhanced-IDE (E-IDE), Serial Advanced Technology Attachment (SATA), direct memory access (DMA), or ultra-DMA).

The computer system 116 may also include a display controller 209 coupled to the bus 202 to control a display 210, such as a cathode ray tube (CRT), for displaying information to a user of the system. For example, the various content options relating to the present invention may be shown as a menu on the display 114 through which the user makes choices using a graphical user interface by simply clicking on the desired selections. The computer system includes input devices, such as a keyboard 211 and a pointing device 212, for interacting with a computer user and providing information to the processor 110 through I/O means 112. The pointing device 212, for example, may be a mouse, a trackball, touchscreen or a pointing stick for communicating direction information and command selections to the processor 110 and for controlling cursor movement on the display 114. In addition, a printer may provide as the output mechanism 114 to print content stored and/or generated by the computer system 116.

The computer system 116 performs a portion or all of the processing steps of the invention in response to the processor 110 executing one or more sequences of one or more instructions contained in a memory, such as the main memory 204. Such instructions may be read into the main memory 204 from another computer readable medium, such as a hard disk 207 or a removable media drive 208. In alternative embodiments, hard-wired circuitry may be used in place of or in combination with software instructions. Thus, embodiments are not limited to any specific combination of hardware circuitry and software described herein.

Stored on any one or on a combination of computer readable media, the present invention includes software for controlling the computer system 116, for driving a device or devices for implementing the invention, and for enabling the computer system 116 to interact with a user (e.g., content production personnel). Such software may include, but is not limited to, device drivers, operating systems, development tools, and application software.

The computer code/ instruction set devices of the present invention may be any interpretable or executable code mechanism, including but not limited to scripts, interpretable programs, dynamic link libraries (DLLs), Java classes, machine language, assembly code and any executable software program. Moreover, parts of the processing of the present invention may be distributed for better performance, reliability, and/or cost.

The computer system 116 also includes a communication interface 213 as part of I/O means 112 coupled to the bus 202. The communication interface 213 provides a two-way data communication coupling to a network link 214 that is connected to, for example, a local area network (LAN) 215, or to another communications network 75 such as the Internet. For example, the communication interface 213 may be a network interface card to attach to any packet switched LAN. As another example, the communication interface 213 may be an asymmetrical digital subscriber line (ADSL) card, an integrated services digital network (ISDN) card or a modem to provide a data communication connection to a corresponding type of communications line; Wireless links may also be implemented. In any such implementation, the communication interface 213 sends and receives electrical, electromagnetic or optical signals that carry digital data streams representing various types of information.

The network link 214 typically provides data communication through one or more networks to other data devices. For example, the network link 214 may provide a connection to another computer through a local network 215 (e.g., a LAN) or through equipment operated by a service provider, which provides communication services through a communications network 75. The local network 214 and the communications network 75 use, for example, electrical, electromagnetic, or optical signals that carry digital data streams, and the associated physical layer (e.g., CAT 5 cable, coaxial cable, optical fiber, etc). The signals through the various networks and the signals on the network link 214 and through the communication interface 213, which carry the digital data to and from the computer system 116 maybe implemented in baseband signals, or carrier wave based signals. The baseband signals convey the digital data as unmodulated electrical pulses that are descriptive of a stream of digital data bits, where the term "bits" is to be construed broadly to mean symbol, where each symbol conveys at least one or more information bits. The digital data may also be used to modulate a carrier wave, such as with amplitude, phase and/or frequency shift keyed signals that are propagated over a conductive media, or transmitted as electromagnetic waves through a propagation medium. Thus, the digital data may be sent as unmodulated baseband data through a "wired" communication channel and/or sent within a predetermined frequency band, different than baseband, by modulating a carrier wave. The computer system 116 can transmit and receive data, including program code, through the network(s) 215 and 75, the network link 214 and the communication interface 213. Moreover, the network link 214 may provide a connection through a LAN 215 to a mobile device 217 such as a personal digital assistant (PDA) laptop computer, or cellular telephone.

### II. System Methodology

The system provides users with four general modes of functionality: Build Pitch, Manage Documents, Generate Reports, and System Administration. The Build Pitch mode is primarily responsible for enabling users to build a customized brochure. The Manage Documents mode enables users to add new or edit/delete existing documents in the content storage database 124. The Generate Reports set of functions enables users to search existing brochures according to specified search criteria. The System Administration mode is access-controlled (for example, by using a usemame and password combination) and allows an authorized user (i.e., an Administrator) to manage system parameters, including profiles of users, practice areas, and locations. Through the System Administration functions, an Administrator provides other users with varying levels of access and functionality within the other three modes. For instance, in one embodiment of the invention, Generate Reports and System Administration features are hidden from unauthorized users when interacting with the system. While the embodiment described herein describes only four functional modes, other embodiments optionally have other modes of functionality as is known in the art.

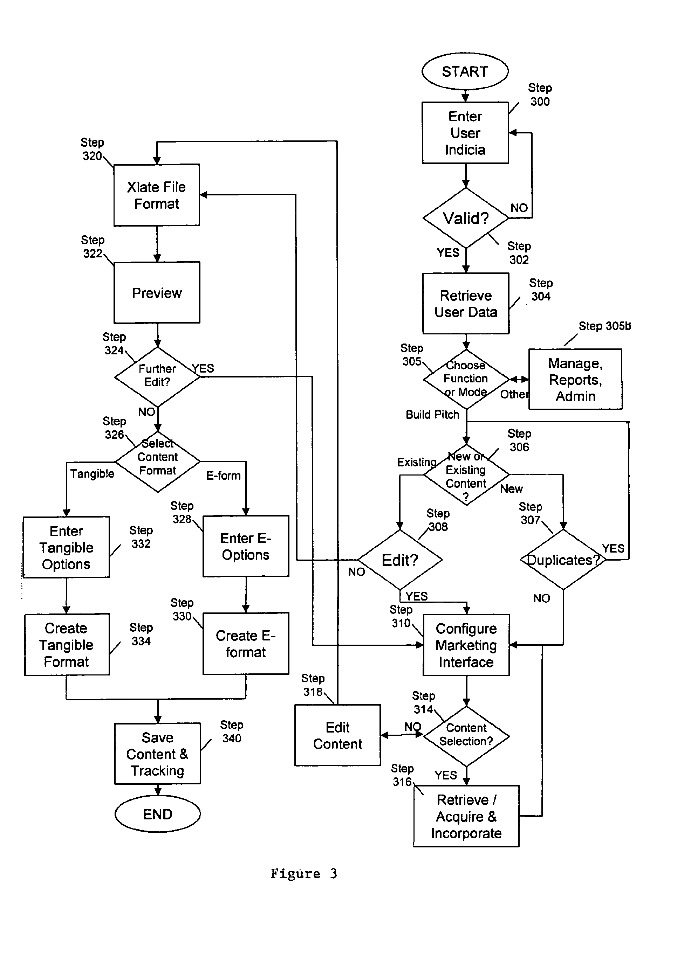

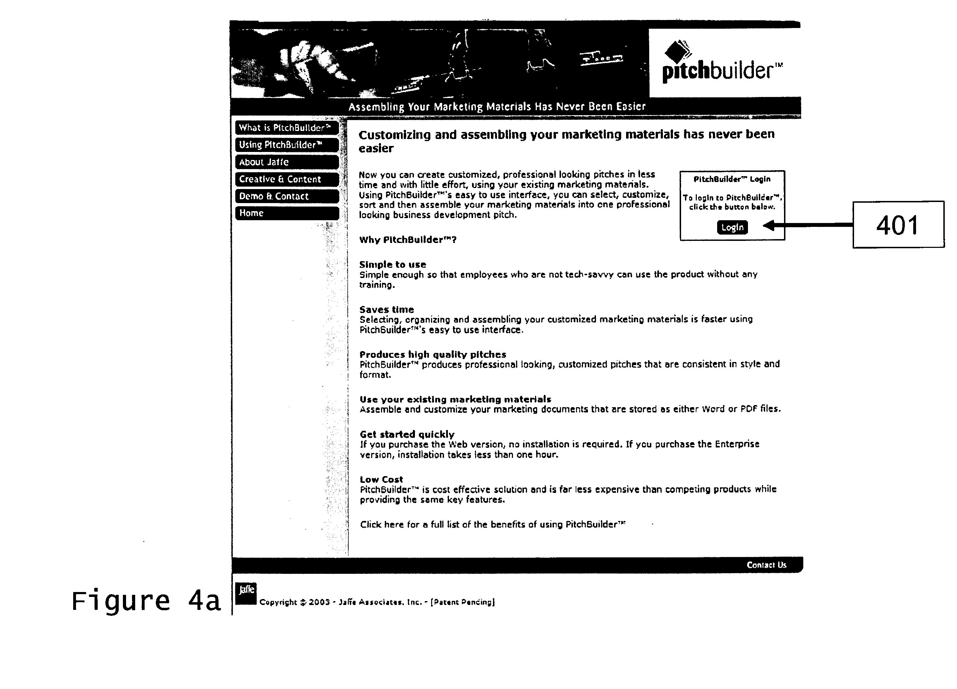

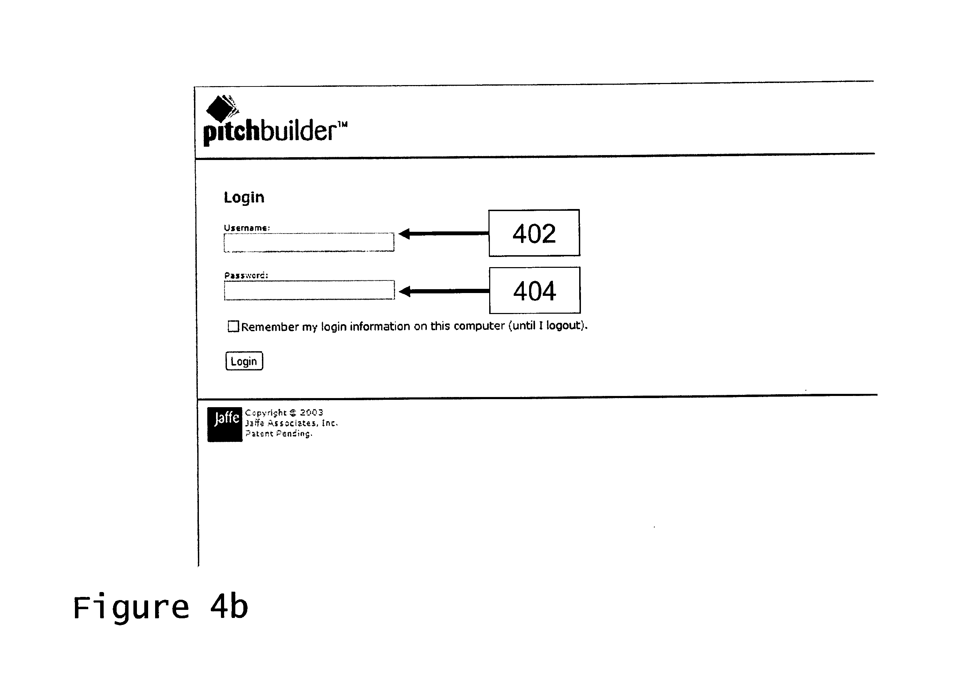

Referring now to FIG. 3, an exemplary flow chart for the Build Pitch mode is shown to illustrate a method of designating selected materials of a collection of content for presentation to a target entity in accordance with the present invention. Figure 3 will be best understood when read in conjunction with FIGs. 4a-8b showing exemplary screen displays and interfaces of the system 100. The screen displays and interfaces of the exemplary embodiment are provided to the user via a GUI, the displays of the exemplary embodiment are preferably created by a browser based programming language such as COLD FUSION, HTML, XML, Java, Active X, ASP, PHP or like.

In the alternative embodiment, where the computer 116 is a web server and the user is operating a network terminal, queries are passed to the server from the network terminal as Asynchronous Common Gateway Interface (ACGI) Events. The server then retrieves relevant data, formats into the appropriate presentation language (e.g., PDF, XML, or HTML) and provides the data to the user via the network terminal.

The Build Pitch process begins at START and proceeds to Step 300 where a user enters the appropriate user indicia queried by the system. As shown in FIG. 4a, which depicts a sample screen display of START, the user clicks on a Login action button 401 from an introductory webpage. The user is then prompted to enter a name in data field 402 and an associated password in data field 404 to gain entry to the system 100. Upon validation of the user name and password in Step 302, the method proceeds to Step 304 where the system 100 retrieves the user's account information in accordance with a correlated access level, otherwise the process loops back to Step 300.

Typically, the user's account information for Step 304 (e.g., formatting preferences and access capabilities) are stored in the administrative information database 120 depicted in FIG. 1. In one embodiment, the formatting preferences are defined as default values which are updated and edited to suit a particular application. Alternatively, the formatting preferences are based on the user's past brochure creation and editing activities within the system. In either case, the user preferences may be used as default parameters to make the process of creating a new brochure more efficient.

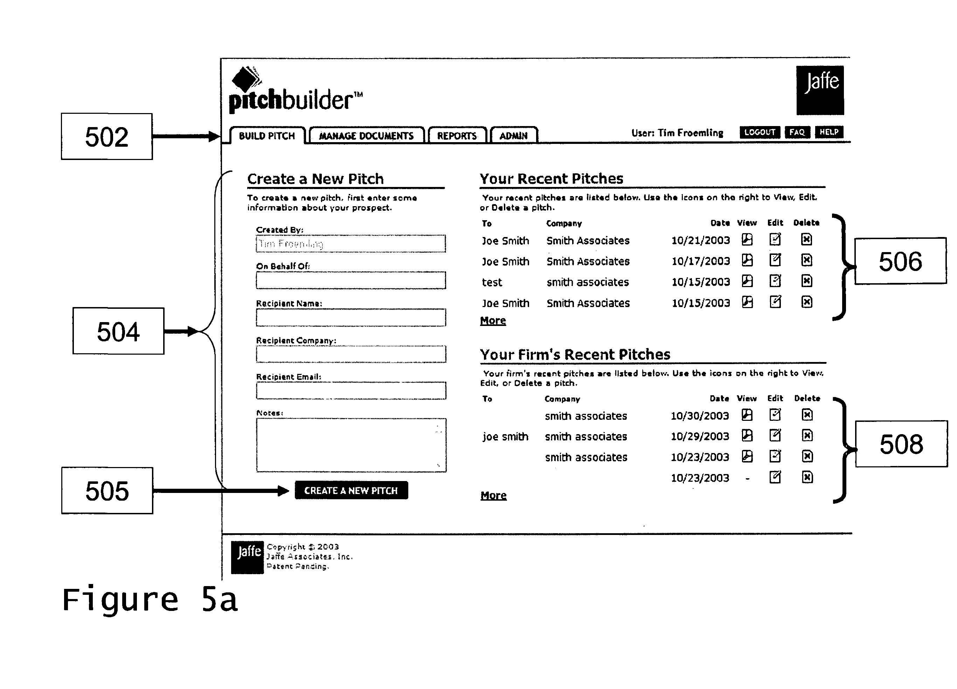

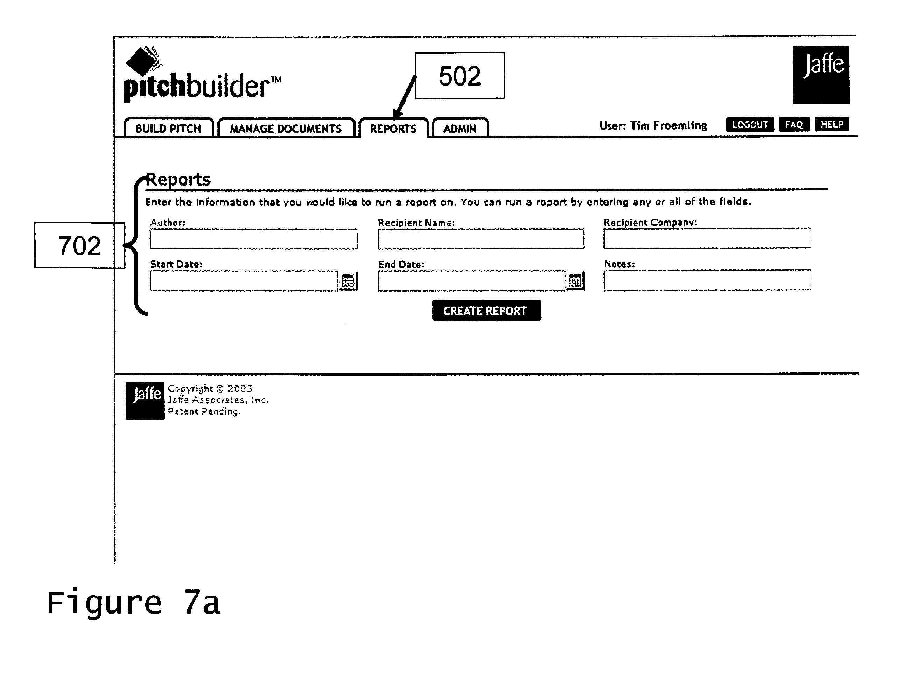

Upon retrieving the user's access capabilities in Step 304, the method proceeds to Step 305. Exemplary template FIG. 5a illustrates an interface that enables a user to choose whether a new brochure is to be created 504 or an existing brochure is to be viewed, edited, or deleted 506, 508. Alternatively, a function selector 502 is used to enter into the system's other functional modes, including Manage Documents, Generate Reports, or System Administration (Step 305b). For instance, if finding the desired existing brochure requires a search, the user could use the Generate Report feature (see FIG. 7a) to retrieve a list of existing available brochures matching particular search criteria. The function selector 502 is generally available to a user throughout the use of any of the system's functions to allow a user to change functional modes while in the course of using another function. In the exemplary embodiment, illustrated in Fig. 5a, the user enters the system in Build Pitch mode after logging in (Step 306).

In an exemplary embodiment, the user may be shown an interface displaying fields and/or action buttons to define a new brochure 504 using tracking data or to view, edit, or delete recent brochures created by the user 506 or recent brochures created by members of the user's company 508. Exemplary account information, such as a user name, is also shown in the sample display of FIG. 5a, generally within 502, 504.

As mentioned above, FIG. 3 represents an exemplary flow chart for the system when the user interacts using the Build Pitch function. If the user plans to work with a previously created existing brochure 506 508, the method proceeds from Step 306 in accordance with the "Existing" brochure to Step 308 where the user is asked whether the existing brochure is to be edited. Further, if content selection is desired, the method proceeds from Step 310 to Step 314, where a user selects content. If editing of content documents is desired, the method proceeds from Step 314 to 318. If editing is not desired, the method proceeds from Step 314 to 320.

The user access level determines what data and functions can be accessed and edited. In the example shown in FIG. 5a, the user has access to four functions within the function selector 502. Alternatively (not shown), a more restricted user may have access only to the Build Pitch and Manage Documents functionality. Moreover, a user's access to functions within the general functional modes of the system (Build Pitch, Manage Documents, Generate Reports, System Administration) are defined and customized by, for example, a system administrator.

In Step 306 of the exemplary Build Pitch use flow, if the user plans to create a new brochure or uses a previous brochure, the method proceeds from Step 308 to Step 310. The exemplary template of FIG. 5a includes data fields 602 and 604 for receiving tracking data. The data fields 504 are provided for receiving tracking data such as the name of recipient, company info, purpose of brochure and notes for use in tracking the efficacy of marketing efforts as well as system utilization. Additional custom data fields for tracking data can be created by authorized users. As described above, a user could use the Generate Reports function (accessible through 502) to search for existing brochures specified search terms within its documents, document names, and tracking data (including custom tracking data fields created by authorized users), then select one for editing using the Build Pitch set of functions.

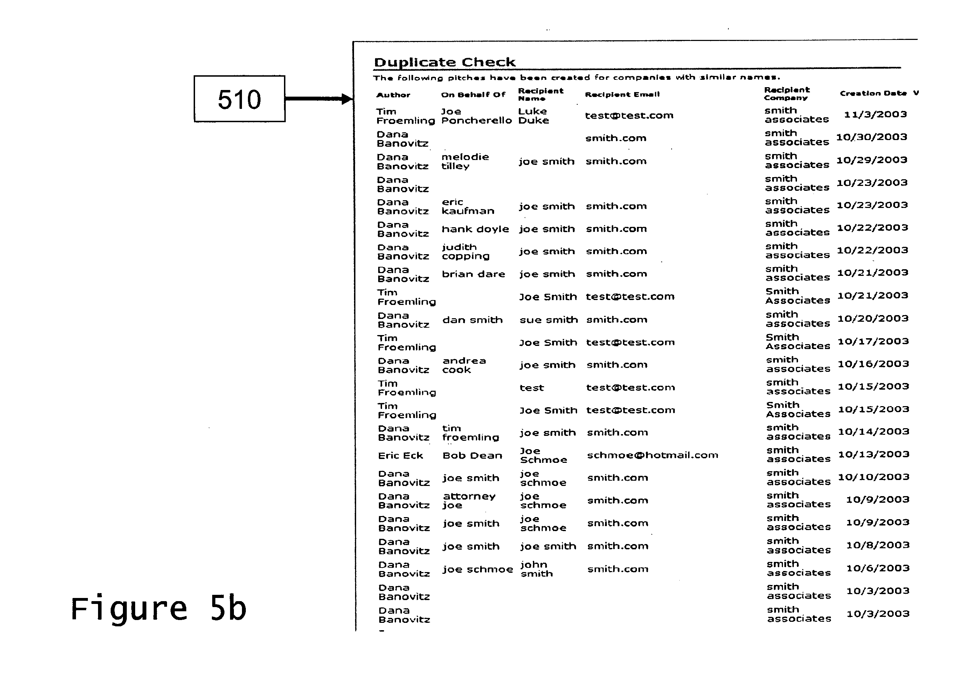

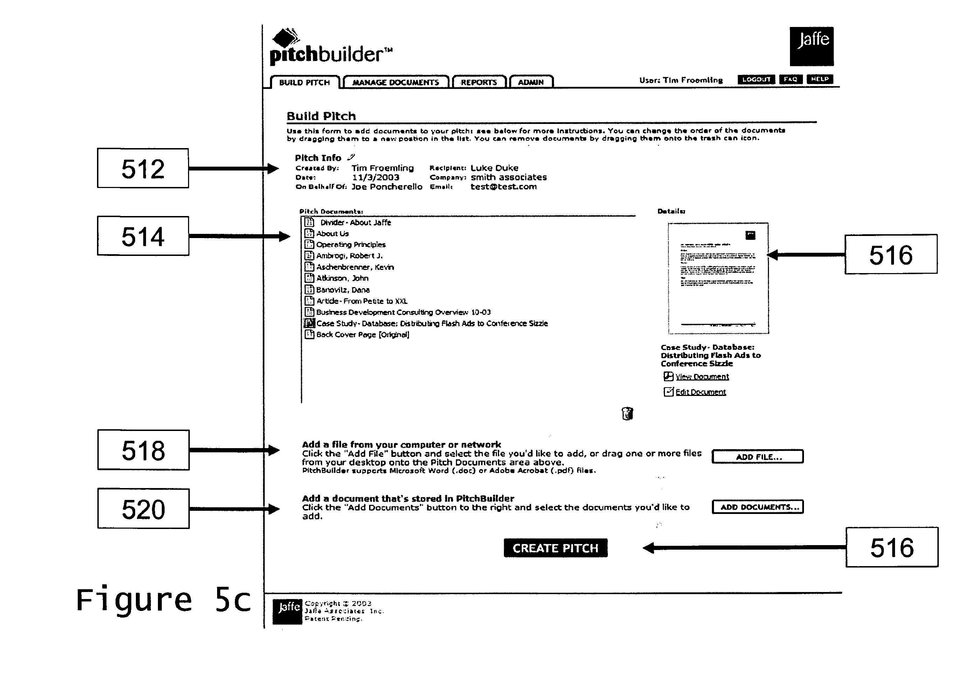

Optionally, if a user decides to create a new brochure 504, the system performs an automatic duplicate check (Step 307) prior to the presentation of the marketing interface of FIG. 5c by identifying brochures that already exist sharing identification information such as company name with the information input into the data fields 504. An exemplary template of such a duplicate feature is shown in FIG. 5b.

Referring again to FIG 5a, upon actuation of an action button to create a new pitch 505, the marketing interface of FIG. 5c is presented to the user, corresponding to Step 310 in FIG. 3.

A marketing interface menu of data contains options from which to choose, edit, delete, and arrange data for creating a marketing brochure. Along these lines, the marketing interface includes a prepopulated or empty list for selected content in an ordering list 514. In another embodiment, the interface presents a user with options for selecting groups of documents according to niche market characteristics. The user may proceed to additional content selections from, for example, storage media on a local computer system 116, a remote content storage database 124, or a remote website using a network address.

Should the user desire to change the order of the selected content, the user "drags and drops" or uses navigational arrows to move the components within the ordering list to arrive at the desired order. The user is also able to edit or delete selected content by clicking on representative icons. Alternative embodiments provide for automatic generation of a table of contents using information such as the titles of selected content documents and automatically generate page numbers in accordance with the layout of documents within the ordering list.

Optionally, the marketing interface also contains a preview window 516 for displaying a preview of a document highlighted in the ordering list. Options to edit the contents of a highlighted document (using a document editor such as MICROSOFT WORD) or to view it at full size is also provided. By providing the user with an option to edit through this interface, the user does not have to exit the Build Pitch process to edit the content of a document. Additionally, the date the highlighted document (or version thereof) was updated can also be viewed in the marketing interface. The user is also given the option to add material to the ordering list displayed in the marketing interface at Step 314.

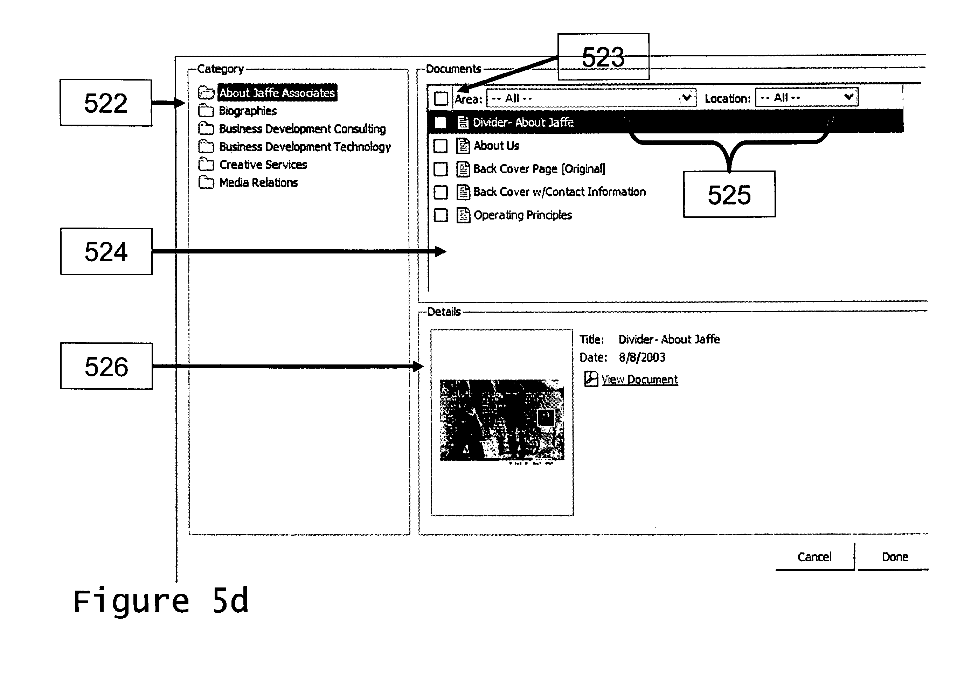

Content is added to the ordering list 514 by adding a file from a local computer or network source such as a remote file server or webpage. For example, the interface shown in FIG. 5c includes two options for adding documents to an ordering list: "add a file from your computer or network" 518 and "add a document that's stored in Pitchbuilder" 520. By selecting the appropriate action button, the user chooses material to add to the ordering list. For example, clicking 520 might allow the user to interact with a content selection interface such as that shown in FIG. 5d, corresponding to Step 316 in FIG. 3. Alternative embodiments of the system enable the use of content stored in a document management system.

Typically, the content options to be presented to a user include one or more overall descriptions of the company, a location map showing the company's offices, pictures of personnel, products and the company's building, a listing of the company's personnel, a description of the company's capabilities, descriptions of the company's products and services, contact information such as telephone numbers and mailing addresses, biographies of the employees of the company, curriculum vitae of employees of the company, pricing data, product order forms, descriptions of career options, or any other material deemed beneficial in a marketing presentation. These content options include preformatted documents such as major document format types (including, but not limited to MICROSOFT WORD, MICROSOFT EXCEL, MICROSOFT POWERPOINT, ADOBE PORTABLE DOCUMENT FORMAT, or WORDPERFECT documents) and documents composed using markup "languages" such as HTML or XML. The system also enables a user to search for documents containing particular terms or having specified characteristics. Embodiments of the invention may have multiple versions of any of the aforementioned types of information available to different respective users, or to the same user in accordance with an access level. For example, the user may be able to choose from a very detailed description of the company and its products, or select a more top level perspective of a few sentences.

At Step 314, if the user desires to make content option selections the method proceeds to Step 316 and the selected content materials are pulled from either a local or remote source for assimilating into the brochure in the desired manner. The method then proceeds back to the Step 310 for reviewing further menu options for selecting content. Once all the content selections have been made and there are no further user selections to be made regarding the content options, the method proceeds in accordance with the "no further content selections" branch from Step 314 to Step 318.

In the exemplary content selection interface of FIG. 5d, a list of categories 522 enables a user to explore the available documents in the collection by document category. Having selected a category, a document selection window 524 is populated with documents of the selected category. Further filtering of results is accomplished through the use of Area and Location menus 525. Highlighted documents produce a preview in the selection preview window 526. Actual selection is accomplished in several ways, including double clicking, dragging-and-dropping, and clicking radio buttons 523. Although not shown, multiple documents can be selected for inclusion in a brochure using this interface at one time, including multiple documents from different categories. In the illustrated embodiment, confirming selection of materials in this interface returns the user to the marketing interface FIG. 5b (Step 310) with the ordering list 514 populated with items selected using the content selection interface.

Having selected the desired documents using the content selection interface FIG. 5d and having ordered them in the ordering list 514, a user edits the brochure and brochure contents using the processes described above. Alternatively, the user now prepares the selected and ordered documents for presentation. In the example shown in FIG. 5c, a "Create Pitch" action button 519 is provided to accomplish such a request.

Once the editing of the marketing brochure has been completed in Step 318, the method proceeds to Step 320 to perform a file format translation on the selected and ordered documents. In Step 322 the various portions of the brochure are translated into one file format, for example, ADOBE PORTABLE DOCUMENT FORMAT. In accordance with alternative embodiments, other formats may be used as well (e.g., GIF, HTML, XML, or like file formats or electronic protocols). In many instances, it is advantageous, for the purposes of printing, emailing and file storage, to translate the entire brochure in a single format. However, alternative embodiments of the present invention creates a brochure as a compilation of various pieces having different file formats (e.g., ASCII text with embedded graphics in PDF), in which case the Step 322 is not performed. Moreover, other embodiments of the system allow for the preservation of formatting of the original documents, including preformatted documents. If desired, the editing of individual document formatting can be accomplished using the methods discussed above in Build Pitch mode or the Manage Documents mode described below.

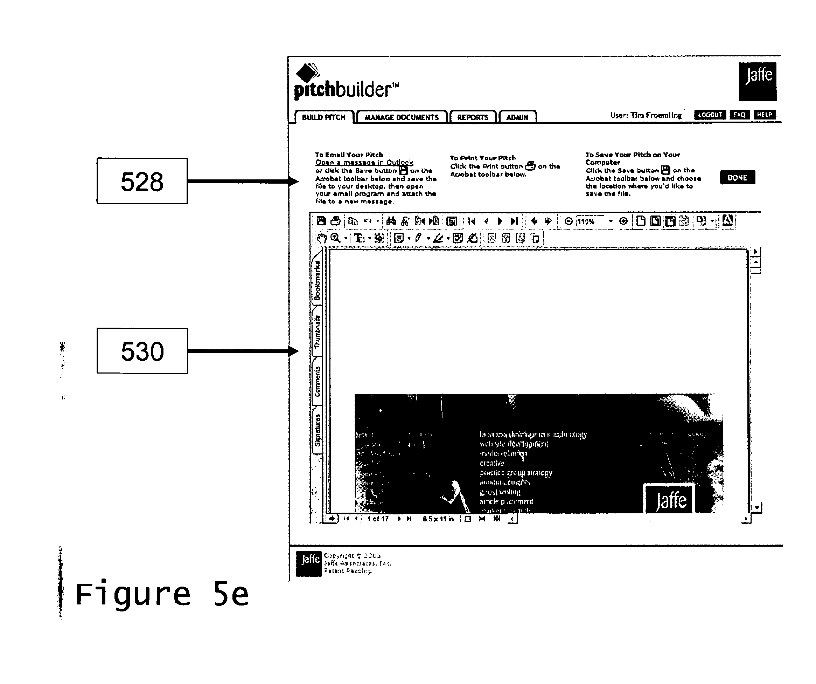

Upon completion of the brochure file translation in Step 320, the method proceeds to Step 320 for a print preview of the final brochure. FIG. 5e is an example screenshot of a preview implementation 530. Typically, in accordance with embodiments of the present invention, the print preview is performed in a WYSIWYG ("What You See Is What You Get") format. In this way, the user is able to review the marketing brochure without wasting the resources required to print out copies for review or the time it takes for such printing. Optionally, the ability to view the file size of the assembled document is provided by the system, enabling a user to optimize the selection of content according to, for example, the capacity of digital media or acceptable sizes for email attachments. Once the marketing brochure has been reviewed in Step 320, the method proceeds to Step 324 where the user is queried as to whether further editing is desired. If the user wants to further edit the format of the marketing brochure, the method returns to Step 308. If no further editing is desired, the method proceeds from Step 324 to Step 326.

In Step 326, the user decides whether to present the selected content in a tangible or e-form as shown at area 528 in the screen display of FIG. 5e. FIG. 5e provides multiple delivery options for the brochure 528, including tangible and electronic format (E-form).

The tangible form may include a printed material or on a recorded medium such as a CD-ROM, DVD, and the like. For creating a tangible form, the method proceeds to Step 334 where the user is requested to enter print options, or configure a write process of a recordable medium drive for creating a recorded medium. Upon deciding on the tangible options (e.g., quantity to be created, device to use, etc), the method proceeds to Step 334 for creating the tangible form. In the example of FIG. 5e, a user prints the brochure using an associated file viewer.

If the user instead decides in Step 326 to send the brochure in E-form, the method proceeds from Step 326 to Step 328 where the user is prompted to enter the options for sending the e-form. For example, where the E-form is email, the user inputs (e.g., addressees, parties to receive copies or blind copies, disclaimers, return address or contact information, or the like). Where the E-form is a audio-visual presentation, (e.g., multimedia, video, audio, or to be uploaded to as a website) the user may enter a peripheral or computer address, such as an Internet protocol (IP) address for receiving the content such as during a video conference. Additional E-form options include a password or a similar security measure to restrict access to the finalized document assembly, providing additional assurance regarding the target audience of a presentation. Upon entering the E-form options, the method proceeds from Step 328 to Step 330 and the brochure is sent in E-form as designated. The system also provides an automated email option with common email clients (such as MICROSOFT OUTLOOK) to automatically attach an E-form to an electronic message such as an email. Alternatively, the user also has the option of saving a copy of the assembled document onto the local computer.

Upon completion of either Step 330 or Step 334, the method proceeds to Step 340 and the brochure is saved to a computer memory such as the content storage database 124 of FIG. 1, a floppy disc or other storage device. Once the brochure has been saved, the method proceeds to END. Optionally, the system also provides for a new brochure or progress on an existing brochure to be saved automatically by the system at specified intervals. This feature allows for greater peace of mind for users and enable progress to be preserved without user intervention. Those skilled in the art will recognize that the above sequence of Steps is exemplary only and that the inventive subject matter can be implemented in an altogether different sequence as described above.

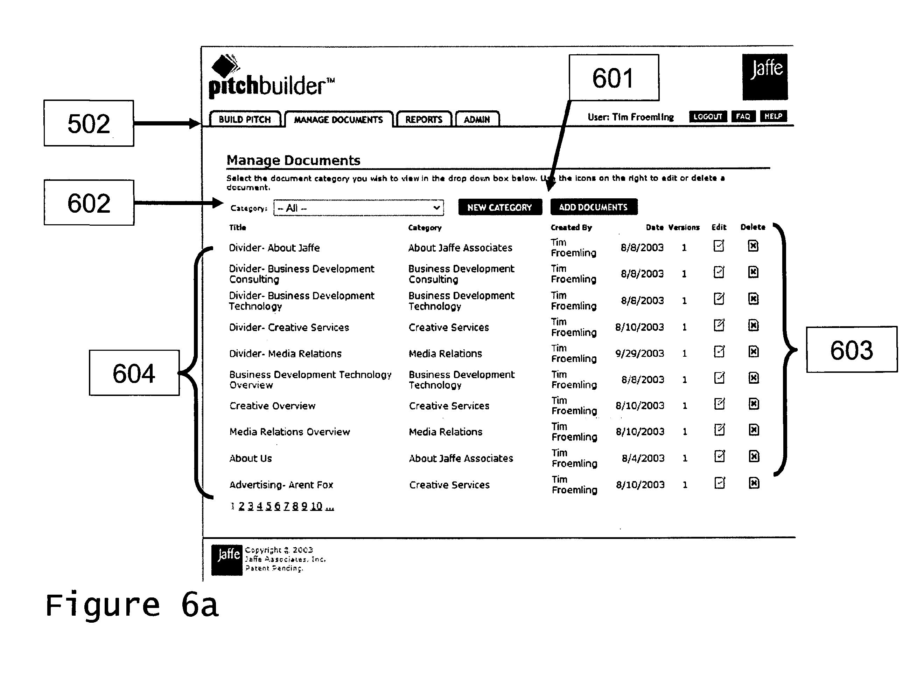

In addition to the editing features accessible to a user using the Build Pitch mode, the Manage Documents functional mode of the system allows a user to effectively manage a large collection of materials through additional interfaces (Step 305b). Examples of interfaces for this mode are shown in FIGs 6a-6g. Note that the "Manage Documents" tab of the function selector 502 is highlighted to inform the user of the mode in which the user is interacting with the system.

FIG. 6a shows an example of a main Manage Documents interface. A user views up to the entire collection of available content in a list 604, with each entry showing a title, document category, creator, date, and version count, as well as with action buttons associated with each entry 603 to edit or delete a particular entry from the collection. Optionally, a category filter is implemented 602 to enable a user to view a list of documents belonging to a particular document category. Another embodiment of the system includes a search feature to search for specific terms in, for example, a document name, within documents, or in tracking data for previously saved brochures. Additionally, action buttons for creating a new category and adding new documents to the collection 601 are implemented.

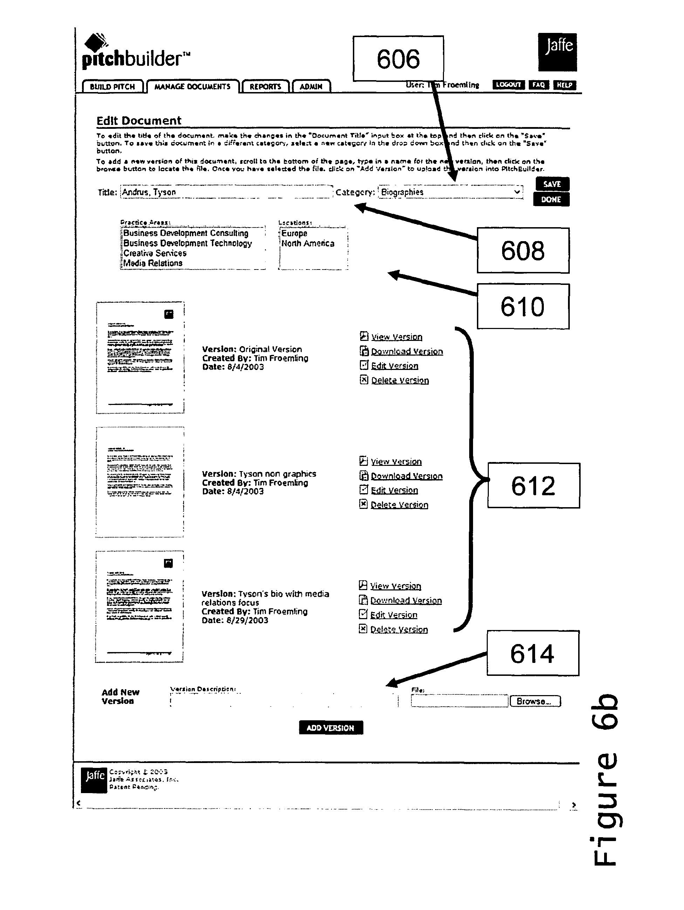

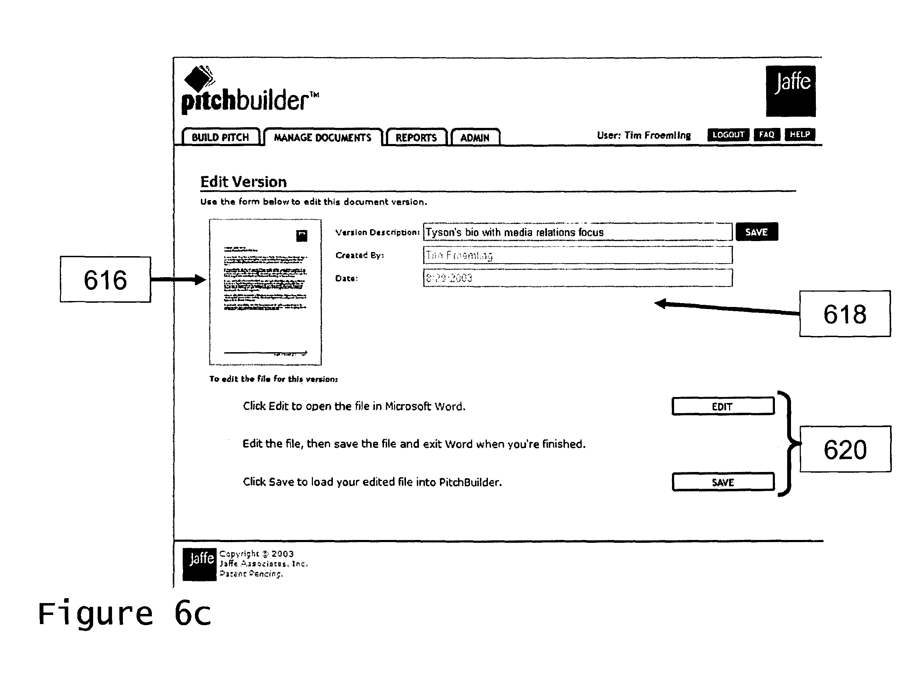

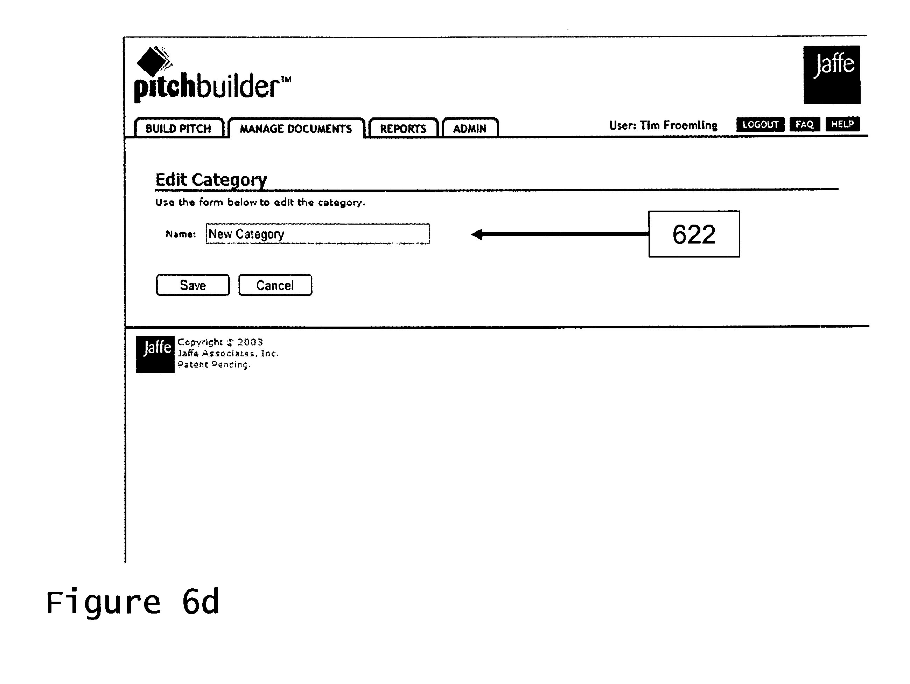

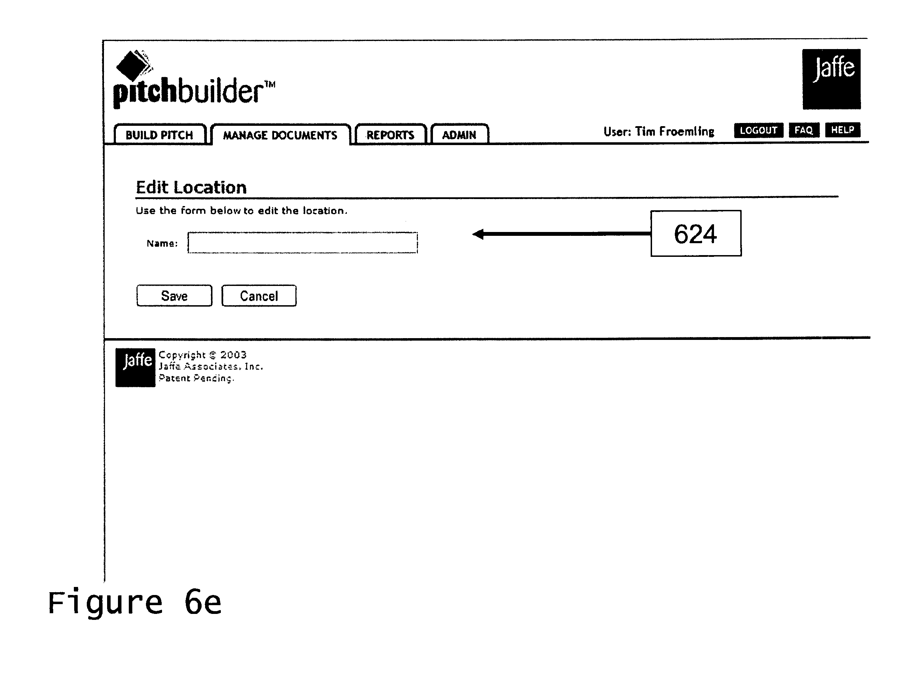

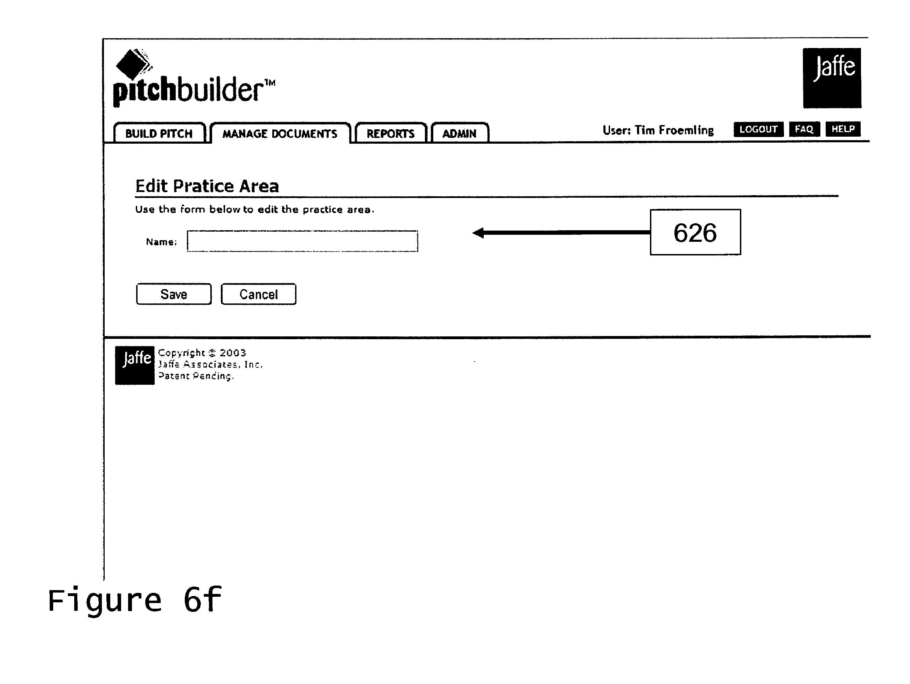

FIG. 6b illustrates an exemplary document editing interface. Through a similar interface, a user edits parameters of a document, including the title 608, category 610, practice areas, and locations 610. In this example, multiple versions of one document, including an original, are previewed as a thumbnail, viewed, downloaded, edited, or deleted 612. In choosing to edit a version of a document, a user might be presented with an interface similar to FIG. 6c. Along with a preview 616 and an editable version description, the interface may provide automatic notation of the creator and creation date 618. In the example shown, editing the document is accomplished through an external editing application 620 such as MICROSOFT WORD or an integrated application (not shown). Exemplary templates for editing document categories, locations, and practice areas are shown at 622, 624, and 626 of FIGs. 6d, 6e, and 6f, respectively.

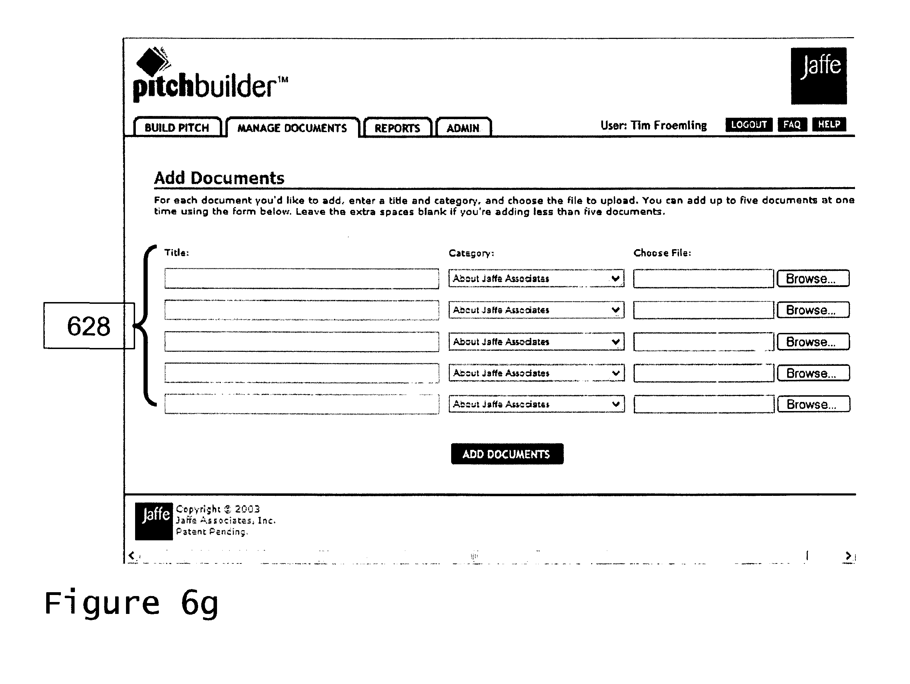

Optionally, the document editing interface (FIG. 6b) can allow for the addition of versions of documents to the collection via entry fields 614 for a document description and a pathname to a local or network source. In an additional example of an interface for adding documents, a template such as that in FIG. 6g is provided enabling batch addition and categorization of new files to the available document collection.

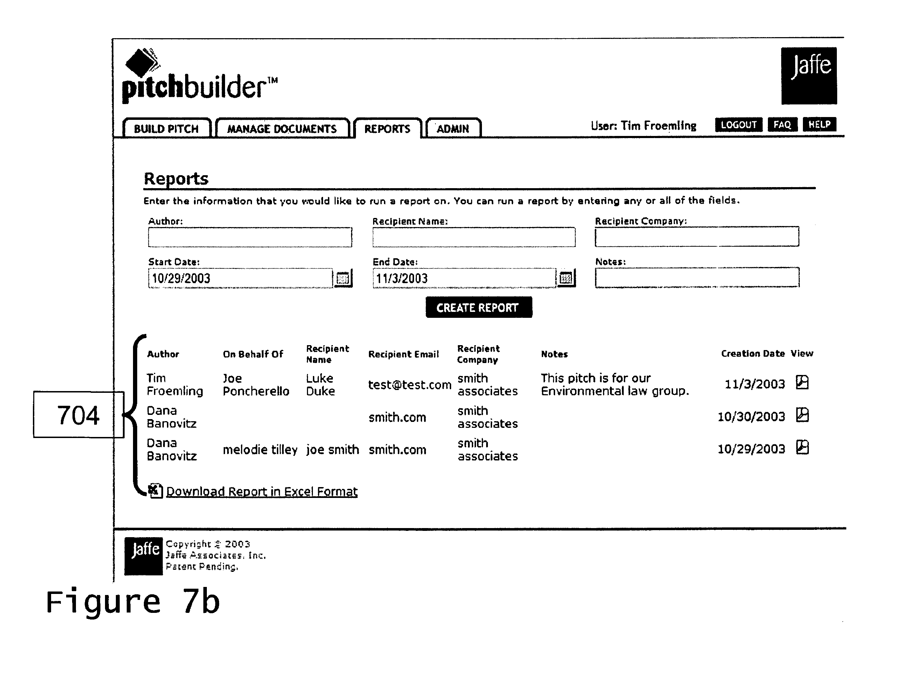

As shown in Fig. 7a, where the user is interested in learning about existing or saved content through a query, the user can use the Generate Reports functionality (Step 305b) by selecting the Generate Reports tab of the function selector 502 to enter tracking data search criteria such as a customer name or creation date into a search field 702 of template of Fig 7a. Custom tracking data fields created by authorized users are also available for use in searching through such an exemplary interface. When instructed, the system reports a list of brochures matching the input search criteria, a sample of which is shown in FIG. 7b. In this way, the user reviews existing materials 704 based on tracking data.

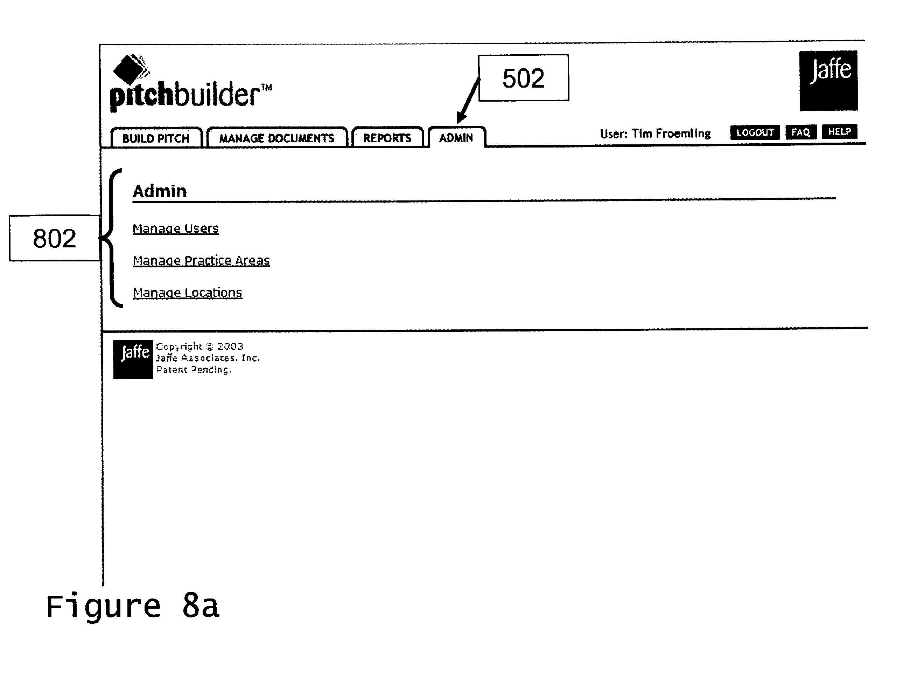

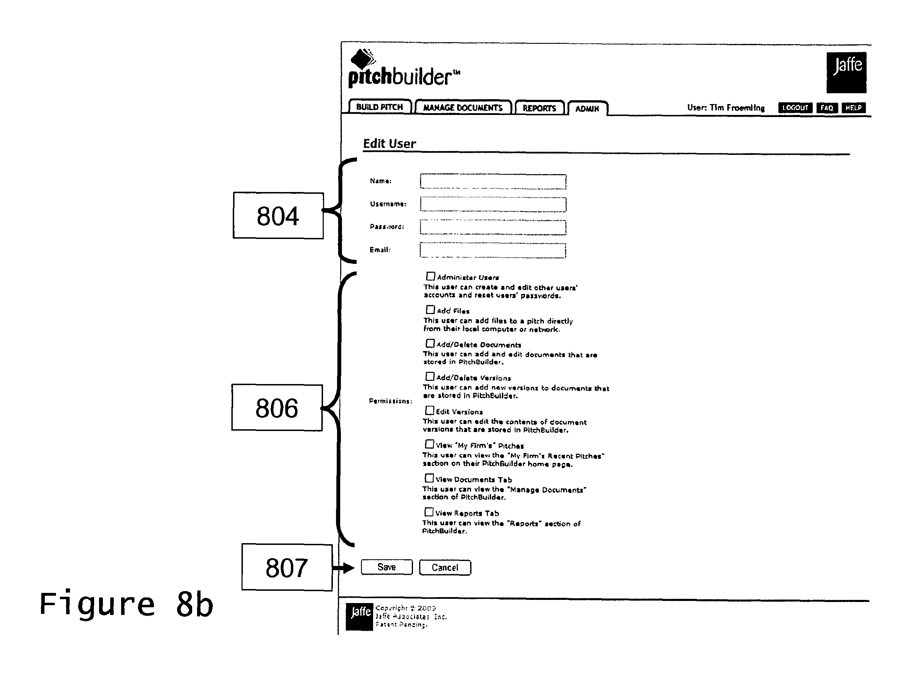

In the Systems Administration mode Step 305b, administrative maintenance can be performed on the system where no content is desired. As shown in Fig 8a, an administrative menu 802 is provided for selecting among the exemplary administrative functions shown, including managing users, practice areas, and locations. Again, the Admin tab of the function selector 502 denotes that the user's interaction relates to Systems Administration. For example, as shown in Fig. 8b, a user profile having associated permissions 806 and identification indicia generally designated 804 is added, edited, or deleted via an administrative procedure, and an action button 807 is provided for initiating the desired procedure 802.

Optionally, the system also allows for single source login to enable users to automatically login to the system using identification indicia 804 identical to the account information used to access their own workstation or operating system. Administrators also have the ability to configure access levels for each user account by document category. Moreover, using other Systems Administration functions (not shown), Administrators are able to view a list of changes made to each document stored by the content storage database 124, including the user who made the changes, the name of the modified document, and the date modification took place.

Obviously, readily discernible modifications and variations of the present invention are possible in light of the above teachings. It is therefore to be understood that within the scope of the appended claims, the invention may be practiced otherwise than as specifically described herein. For example, while described in terms of both software and hardware components interactively cooperating, it is contemplated that the system described herein may be practiced entirely in software. The software may be embodied in a carrier such as magnetic or optical disk, or a radio frequency or audio frequency carrier wave.

Thus, the foregoing discussion discloses and describes merely exemplary embodiment of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, define, in part, the scope of the foregoing claim terminology such that no inventive subject matter is dedicated to the public.

## Claims

1. A computer-implemented method of designating material from a collection of content for presentation to a target entity, comprising steps of:
prompting a user to input identification indicia associated with the user, the identification indicia corresponding to an access level of a plurality of access levels;
granting the user access at the access level in response to the identification indicia input by the user in the prompting step;
providing a marketing interface to the user for selecting one of a plurality of content options made available to the user in accordance with the access level;
designating the selected materials targeted for the target entity by selecting the content options of the marketing interface;
providing the user with an option for editing the appearance of the selected materials; and
producing the selected materials of the collection of content for presentation to the target entity, wherein the collection of content includes a preformatted electronic document.

2. The method according to claim 1, further comprising a step of:
prompting the user for target entity information for use in identifying the selected materials.

3. The method according to claim 1, further comprising a step of:
prompting the user for comments regarding the selected material.

4. The method of claim 1, said step of producing comprising a step of:
editing, in accordance with the access level, the material.

5. The method according to claim 1, wherein the collection of content includes at least one of audio data and video data.

6. The method according to claim 1, wherein the producing step includes producing the selected materials as a printed copy of said selection of materials.

7. The method according to claim 1, wherein the preformatted document is one of a MICROSOFT EXCEL document, a MICROSOFT POWERPOINT document, a MICROSOFT WORD document, and an ADOBE PORTABLE DOCUMENT FORMAT document.

8. The method according to claim 1, further comprising a step of:
selecting one or more niche market content options provided to the user by the marketing interface for inclusion into the collection of content.

9. The method according to claim 1, further comprising a step of:
arranging the one or more of the niche market content options into a desired sequence for the presentation.

10. The method according to claim 1, further comprising a step of:
translating the selected materials into a single electronic format.

11. The method according to claim 8, where each niche market selected includes a sub-menu for designating further information pertaining to the niche market.

12. The method of claim 6, further comprising a step of:
binding the printed copy.

13. The method of claim 1, further comprising a step of:
providing a user with at least one option for formatting the appearance of a selected material, wherein at least one option includes preserving the original formatting of the selected material.

14. The method of claim 1, further comprising a step of:
storing the presentation of selected materials and associated identification information for tracking purposes.

15. The method of claim 1, further comprising a step of:
generating a table of contents and page numbers for the selected materials.

16. The method of claim 14, further comprising a step of:
checking for selected materials sharing at least one of an associated identification information.

17. The method according to claim 4, wherein the editing steps includes uploading new content.

18. The method according to claim 17, wherein the new content resides in a document management system.

19. The method according to claim 17, wherein new content includes data from a website.

20. An electronic system for designating selected materials of a collection of content for presentation to a target entity, comprising:
means for storing the collection of content;
means for prompting a user to an access level of a plurality of access levels, the user being granted access to the content at the access level;
interface means for selecting content options in accordance with the access level to designate the selected materials targeted for the target entity by selecting the content options and for providing the user with options for editing the selected materials; and
output means for producing the selected materials of the collection of content for presentation to the target entity, wherein the collection of content includes a preformatted electronic document.

21. The electronic system of claim 20, wherein the output means includes a telecommunication link for providing the selected materials to the target entity.

22. The electronic system of claim 21, wherein the telecommunication link is wireless.

23. The electronic system of claim 20, wherein the output means is a printing device.

24. The electronic system of claim 20, wherein the means for storing comprises a remotely accessible database such as a network server or WAN (Wide Area Network).

25. The electronic system of claim 20, further comprising:
means for adding new content data to the collection of content.

26. The electronic system of claim 20, wherein the preformatted document is one of a MICROSOFT EXCEL document, a MICROSOFT POWERPOINT document, a MICROSOFT WORD document, and an ADOBE PORTABLE DOCUMENT FORMAT document.

27. The electronic system of claim 20, further comprising:
means for generating a table of contents and page numbers for the selected materials.

28. The electronic system of claim 25, wherein the new content data includes data from a website.

29. The electronic system of claim 20, further comprising:
means for preserving or altering original formatting of a preformatted document.

30. The electronic system of claim 20, further comprising:
means for storing the presentation of selected materials and associated identification information for tracking purposes.

31. The electronic system of claim 30, further comprising:
means for checking selected materials sharing at least one of an associated identification information.

32. A computer readable carrier including computer program instructions that cause a computer to implement a method of designating selected materials of a collection of content for presentation to a target entity, the method comprising steps of:
prompting a user in input identification indicia associated with the user, the identification indicia corresponding to an access level of a plurality of access levels;
granting the user access at the access level in response to the identification indicia input by the user in the prompting step;
providing a marketing interface to the user for selecting a plurality of content options made available to the user in accordance with the access level;
designating the selected materials targeted for the target entity by selecting the content options of the marketing interface;
providing the user with an option for editing the appearance of the selected materials; enabling the user to add or remove content data to the collection of content; and
producing the selected materials of the collection of content for presentation to the target entity, wherein the collection of content includes a preformatted electronic document.
